# EUROPÄISCHE PATENTSCHRIFT

(11) **EP 2 913 727 B1**
(45) Veröffentlichungstag und Bekanntmachung des Hinweises auf die Patenterteilung: **21.09.2016**
(21) Anmeldenummer: 14157152.1
(22) Anmeldetag: 28.02.2014
(51) Int. Cl.: H04L 12/40, H04L 12/933, G05B 19/05, H04L 12/931

(54) **Verfahren zur Übermittlung von Nachrichten über ein Rückwandbus-System eines modularen industriellen Automatisierungsgeräts**
Method for transmitting messages via a backplane of a modular industrial automation device
Procédé de transmission de messages via un système bus de fond de panier d'un automate industriel modulaire

(43) Veröffentlichungstag der Anmeldung: 02.09.2015
(73) Patentinhaber: Siemens Aktiengesellschaft, 80333 München (DE)
(72) Erfinder: Albrecht, Harald, Dr., 90475 Nürnberg (DE); Plonka, Reiner, 90768 Fürth (DE)

(56) Entgegenhaltungen:
- EP-B1- 1 188 293
- US-A1- 2002 059 485
- US-A1- 2003 067 926
- US-A1- 2004 114 591

## Beschreibung

Industrielle Automatisierungssysteme dienen zur Überwachung, Steuerung und Regelung von technischen Prozessen, insbesondere im Bereich Fertigungs-, Prozeß- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aus EP 1 188 293 B1 ist ein Schnittstellenmodul für eine speicherprogrammierbare Steuerung bekannt, das eine Übermittlung von Datenanforderungen durch ein Kommunikationsgerät oder eine Rechnereinheit außerhalb eines industriellen Automatisierungssystems an die speicherprogrammierbare Steuerung ermöglicht, beispielsweise per Internet. Das Schnittstellenmodul umfaßt einen Prozessor mit einem Echtzeitbetriebssystem, eine Kommunikationsnetzschnittstelle und einen Rückwandbus-Treiber für ein Rückwandbus-System der speicherprogrammierbaren Steuerung. Darüber hinaus sind im Schnittstellenmodul ein doppelter Protokollstapel, der einen ersten und einen zweiten Protokollstapel umfaßt, sowie ein Client-Steuerungsprozeß implementiert. Der Client-Steuerungsprozeß dient dazu, um mit dem doppelten Protokollstapel sowie dem Rückwandbus-Treiber zu kommunizieren und Datenanforderungen zu initiieren. Zusätzlich ist ein Server-Steuerungsprozeß vorgesehen, um mit dem doppelten Protokollstapel sowie dem Rückwandbus-Treiber zu kommunizieren und auf Datenanforderungen zu antworten. Darüber hinaus dient ein Protokoll-Steuerungsprozeß dazu, um mit dem doppelten Protokollstapel sowie dem Rückwandbus-Treiber zu kommunizieren und an den Protokollstapel gerichtete Anforderungen abzurufen sowie zu beantworten. Während der erste Protokollstapel für zeitunkritische Nachrichten vorgesehen ist, werden zeitkritische Nachrichten durch den zweiten Protokollstapel behandelt.

In US 2004/0114591 A1 ist eine speicherprogrammierbare Steuerung beschrieben, die ein Rückwandbus-System sowie mit dem Rückwandbus-System verbundene Module umfaßt, die mittels Internet-Kommunikationsprotokoll (IP) über das Rückwandbus-System kommunizieren. Dabei weist jedes Modul eine eigene IP-Adresse auf.

Um Nachrichten aus unterschiedlichen Subnetzen zwischen zwei an ein Rückwandbus-System angeschlossenen IP-fähigen Modulen, denen jeweils ein Subnetz zugeordnet ist, IP-basiert über das Rückwandbus-System zu übermitteln, könnte grundsätzlich für jedes IP-fähige Modul ein eigener IP-Stack vorgehen und das Rückwandbus-System als eigenes Subnetz betrieben werden. In diesem Fall müßten für jedes IP-fähige Modul eine separate IP-Adresse am Rückwandbus-System und Routing-Funktionen vorgesehen werden. Bei einer Nachrichtenübermittlung zwischen zwei Subnetzen über die IP-fähigen Module und das Rückwandbus-System würden also immer zwei vollständige IP-Stacks verarbeitet, und zwar beim Übergang auf das Rückwandbus-System und beim Übergang vom Rückwandbus-System.

Der vorliegenden Erfindung liegt daher die Aufgabe zugrunde, ein modulares industrielles Automatisierungsgerät zu schaffen, das eine effiziente IP-basierte Nachrichtenübermittlung über ein Rückwandbus-System des Automatisierungsgeräts ermöglicht, sowie ein geeignetes Verfahren zur Nachrichtenübermittlung anzugeben.

Diese Aufgabe wird erfindungsgemäß durch ein modulares industrielles Automatisierungsgerät mit den in Anspruch 1 angegebenen Merkmalen und durch ein Verfahren mit den in Anspruch 11 angegebenen Merkmalen gelöst. Vorteilhafte Weiterbildungen der vorliegenden Erfindung sind in den abhängigen Ansprüchen angegeben.

Das erfindungsgemäße Automatisierungsgerät weist ein Rückwandbus-System und mehrere an das Rückwandbus-System angeschlossene Funktionsmodule auf. Die Funktionsmodule umfassen jeweils einen Kommunikationsnetzadapter, eine Funktionseinheit zur Implementierung eines Kommunikationsprotokollstapels und ein mit dem Kommunikationsnetzadapter verknüpftes Brückenelement. Zur einfachen Anpassung an anwendungsspezifische Anforderungen sind die Funktionseinheiten zur Implementierung eines Kommunikationsprotokollstapels vorzugsweise jeweils softwareimplementiert. Das Brückenelement weist einen ersten Dienstzugangspunkt für die Funktionseinheit zur Implementierung des Kommunikationsprotokollstapels und einen zweiten Dienstzugangspunkt auf, der dem Rückwandbus-System zugeordnet ist. Die Kommunikationsprotokollstapel der Funktionsmodule umfassen Transport-Funktionen, während Routing-Funktionen von den Kommunikationsprotokollstapeln der Funktionsmodule ausgenommen sind. Die Funktionsmodule können beispielsweise eine Zentraleinheit bzw. ein Kommunikationsmodul eines modularen Automatisierungsgeräts sein.

Darüber hinaus weist das erfindungsgemäße Automatisierungsgerät ein an das Rückwandbus-System angeschlossenes Router-Modul auf, das einen Kommunikationsnetzadapter, eine mit dem Kommunikationsnetzadapter verknüpfte Funktionseinheit zur Implementierung eines Router-Kommunikationsprotokollstapels und für jedes Funktionsmodul jeweils ein Verknüpfungselement umfaßt. Das Verbindungselement verknüpft die Funktionseinheit zur Implementierung des Router-Kommunikationsprotokollstapels über das Rückwandbus-System mit dem zweiten Dienstzugangspunkt des jeweiligen Funktionsmoduls. Nur der Kommunikationsprotokollstapel des Router-Moduls umfaßt Routing-Funktionen. Die Kommunikationsprotokollstapel der Funktionsmodule und der Router-Protokollstapel sind vorzugsweise IP-Stacks, insbesondere TCP/IP-Stacks oder UDP/IP-Stacks. Darüber hinaus können Verknüpfungselemente des Router-Moduls vorteilhafterweise als virtualisierte Kommunikationsnetzadapter ausgestaltet sein.

Im Vergleich zu bisherigen Lösungen ist beim erfindungsgemäßen Automatisierungsgerät kein explizites IP-Subnetz für das Rückwandbus-System erforderlich. Dies ermöglicht einen reduzierten Verwaltungsaufwand. Darüber hinaus weist beim erfindungsgemäßen Automatisierungsgerät lediglich das Router-Modul Routing-Funktionalität auf, nicht aber die Funktionsmodule. Bei bisherigen Lösungen müssen dagegen pro Funktionsmodul separate Router-Einheiten geplant und konsistent zueinander verwaltet werden.

Entsprechend einer vorteilhaften Ausgestaltung des erfindungsgemäßen Automatisierungsgeräts umfassen die Kommunikationsnetzadapter jeweils eine Sende- und Empfangseinheit sowie eine Funktionseinheit zur Steuerung eines Zugriffs auf ein Kommunikationsmedium. Die Brückenelemente sind vorzugsweise jeweils eine MAC-Bridge. Entsprechend einer bevorzugten Ausgestaltung der vorliegenden Erfindung sind die MAC-Bridges jeweils softwareimplementiert. Um unnötigen Nachrichtenverkehr über das Rückwandbus-System zu vermeiden bzw. zu reduzieren, umfassen die Brückenelemente entsprechend einer weiteren Ausgestaltung des erfindungsgemäßen Automatisierungsgeräts vorteilhafterweise jeweils eine Nachrichtenfiltereinheit am zweiten Dienstzugangspunkt. Nachrichten können dabei je nach betroffener Protokollebene beispielsweise Datensegmente, Datenpakete oder Datenrahmen sein. Zur zuverlässigen Aufteilung von Nachrichten, die über die Kommunikationsprotokollstapel der Funktionsmodule zu verarbeiten sind, und Nachrichten, die über den Router-Kommunikationsprotokollstapel zu verarbeiten sind, ist jedem Dienstzugangspunkt vorzugsweise jeweils eine eigene MAC-Adresse zugeordnet.

Das erfindungsgemäße Verfahren ist zur Übermittlung von Nachrichten über ein Rückwandbus-System eines Automatisierungsgeräts entsprechend vorangehenden Ausführungen vorgesehen. Dabei werden an den Kommunikationsnetzadaptern der Funktionsmodule empfangene Nachrichten entsprechend ihrer jeweiligen Ziel-MAC-Adresse an den ersten bzw. zweiten Dienstzugangspunkt des Brückenelements des jeweiligen Funktionsmoduls weitergeleitet. An den ersten Dienstzugangspunkt weitergeleitete Nachrichten werden durch die Funktionseinheit zur Implementierung des Kommunikationsprotokollstapels des jeweiligen Funktionsmoduls verarbeitet. Dagegen werden an den zweiten Dienstzugangspunkt weitergeleitete Nachrichten über das Rückwandbus-System an ein jeweils zugeordnetes Verknüpfungselement des Router-Moduls weitergeleitet und durch die Funktionseinheit zur Implementierung des Router-Kommunikationsprotokollstapels verarbeitet.

Entsprechend einer bevorzugten Weiterbildung des erfindungsgemäßen Verfahrens werden von den Funktionseinheiten zur Implementierung des Kommunikationsprotokollstapels des jeweiligen Funktionsmoduls ausgehende Nachrichten entsprechend ihrer jeweiligen Ziel-MAC-Adresse an den Kommunikationsnetzadapter des jeweiligen Funktionsmoduls bzw.das jeweils zugeordnete Verknüpfungselement des Router-Moduls übermittelt. Darüber hinaus werden entsprechend einer weiteren Ausgestaltung des erfindungsgemäßen Verfahrens von der Funktionseinheit zur Implementierung des Router-Kommunikationsprotokollstapels ausgehende Nachrichten entsprechend ihrer jeweiligen Ziel-MAC-Adresse über das jeweils zugeordnete Verknüpfungselement an den Kommunikationsnetzadapter bzw. die Funktionseinheit zur Implementierung des Kommunikationsprotokollstapels des jeweiligen Funktionsmoduls übermittelt.

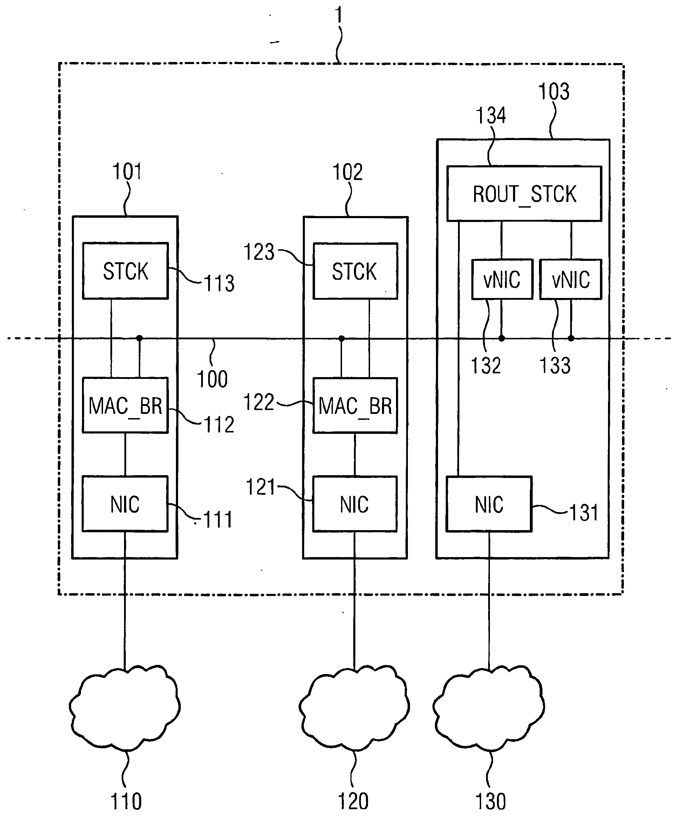

Die vorliegende Erfindung wird nachfolgend an einem Ausführungsbeispiel anhand der Zeichnung näher erläutert. Es zeigt die
- Figur: eine schematische Darstellung eine modularen industriellen Automatisierungsgeräts mit mehreren an ein Rückwandbus-System angeschlossenen Funktionsmodulen.

Das in der Figur dargestellte Automatisierungsgerät 1 weist ein Rückwandbus-System 100 und zwei an das Rückwandbus-System 100 angeschlossene Funktionsmodule 101-102 auf. Das Automatisierungsgerät 1 ist im vorliegenden Ausführungsbeispiel eine speicherprogrammierbare Steuerung. Dabei ist ein erstes Funktionsmodul 101 der speicherprogrammierbaren Steuerung ein Kommunikationsprozessor, während ein zweites Funktionsmodul 102 eine Steuerungszentraleinheit ist.

Beide Funktionsmodule 101-102 umfassen jeweils einen Kommunikationsnetzadapter 111, 121 zum Anschluß an separate IP-Subnetze 110, 120. Außerdem umfassen die beiden Funktionsmodule 101-102 jeweils eine Protokoll-Funktionseinheit 113, 123 zur Implementierung eines Kommunikationsprotokollstapels, die über einen Kommunikationsnetzadapter-Treiber als Hardwareabstraktionseinheit auf den jeweiligen Kommunikationsnetzadapter 111, 121 zugreift. Die Protokoll-Funktionseinheiten 113, 123 sind vorzugsweise softwareimplementiert.

Darüber hinaus umfassen beide Funktionsmodule 101-102 jeweils eine vorzugsweise softwareimplementierte MAC-Bridge 112, 122, die den jeweiligen Kommunikationsnetzadapter 111, 121 sowohl mit dem Rückwandbus-System 100 als auch mit der Protokoll-Funktionseinheit 113, 123 des jeweiligen Funktionsmoduls 101-102 verknüpft. Hierzu stellt jede MAC-Bridge 112, 122 einen ersten Dienstzugangspunkt für die jeweilige Protokoll-Funktionseinheit 113, 123 und einen zweiten Dienstzugangspunkt bereit, der dem Rückwandbus-System 100 zugeordnet ist. Dabei ist jedem Dienstzugangspunkt eine eigene MAC-Adresse zugeordnet. Zusätzlich weisen die MAC-Bridges 112, 122 an ihrem zweiten Dienstzugangspunkt jeweils eine integrierte Paketfiltereinheit auf. Damit können beispielsweise nicht routbare Broadcasts ausgefiltert werden. Dies trägt zu einem reduzierten Nachrichtenaufkommen über das Rückwandbus-System bei.

In das Automatisierungsgerät 1 ist außerdem ein an das Rückwandbus-System 100 angeschlossenes Router-Modul 103 integriert. Das Router-Modul 103 umfaßt einen Kommunikationsnetzadapter 131, eine mit dem Kommunikationsnetzadapter 131 verknüpfte Router-Funktionseinheit 134 zur Implementierung eines Router-Kommunikationsprotokollstapels und jeweils einen virtuellen Kommunikationsnetzadapter 132-133 für jedes Funktionsmodul 101-102. Die virtuellen Kommunikationsnetzadapter 132-133 können im Router-Modul 103 dynamisch zur Laufzeit erzeugt und entfernt werden. Über den Kommunikationsnetzadapter 131 ist das Router-Modul 103 an ein separates IP-Subnetz 130 angeschlossen. Über einen Kommunikationsnetzadapter-Treiber greift die Router-Funktionseinheit 134 wiederum auf den Kommunikationsnetzadapter 131 des Router-Moduls 103 zu. Die Router-Funktionseinheit 134 ist vorzugsweise softwareimplementiert.

Sämtliche Kommunikationsnetzadapter 111, 121, 131 umfassen im vorliegenden Ausführungsbeispiel jeweils eine Sende- und Empfangseinheit (PHY) sowie eine Funktionseinheit (MAC) zur Steuerung eines Zugriffs auf ein Kommunikationsmedium.
Bei Verwendung von IPv6 können anhand einer Projektierung der Kommunikationsnetzadapter 111, 121 der Funktionsmodule 101-102 geeignete Router-IP-Adressen abgeleitet werden.

Sowohl die Kommunikationsprotokollstapel der Funktionsmodule 101-102 als auch der Router-Protokollstapel sind im vorliegenden Ausführungsbeispiel IP-Stacks. Die IP-Stacks der Funktionsmodule 101-102 werden ohne IP-Routing-Funktionen betrieben. Dies ist lediglich dem IP-Stack des Router-Moduls vorbehalten. Darüber hinaus bildet das Rückwandbus-System 100 kein IP-Subnetz, sondern wird lediglich als Verbindung zwischen den virtuellen Kommunikationsnetzadaptern 132-133 und den MAC-Bridges 112, 122 genutzt.

An den Kommunikationsnetzadaptern 111, 112 der Funktionsmodule 101-102 empfangene Nachrichten werden entsprechend ihrer jeweiligen Ziel-MAC-Adresse an den ersten bzw. zweiten Dienstzugangspunkt der MAC-Bridge 112, 122 des jeweiligen Funktionsmoduls 101-102 weitergeleitet. Dabei werden an den ersten Dienstzugangspunkt weitergeleitete Nachrichten durch die Protokoll-Funktionseinheit 113, 123 des jeweiligen Funktionsmoduls 101-102 verarbeitet. Dagegen werden an den zweiten Dienstzugangspunkt weitergeleitete Nachrichten über das Rückwandbus-System 110 an den jeweils zugeordneten virtuellen Kommunikationsnetzadapter 132-133 des Router-Moduls 103 weitergeleitet und anschließend durch die Router-Funktionseinheit verarbeitet werden.

Von den Protokoll-Funktionseinheiten 113, 123 ausgehende Nachrichten werden entsprechend ihrer jeweiligen Ziel-MAC-Adresse an den Kommunikationsnetzadapter 111, 121 des jeweiligen Funktionsmoduls bzw. den jeweils zugeordneten virtuellen Kommunikationsnetzadapter 132-133 des Router-Moduls 103 übermittelt. Des weiteren werden von der Router-Funktionseinheit 134 ausgehende Nachrichten entsprechend ihrer jeweiligen Ziel-MAC-Adresse über den jeweils zugeordneten virtuellen Kommunikationsnetzadapter 132-133 an den Kommunikationsnetzadapter 111, 121 bzw. die Router-Funktionseinheit 113, 123 des jeweiligen Funktionsmoduls 101-102 übermittelt. Hinsichtlich einer Kommunikationsnetzplanung verhält sich das Router-Modul 103 wie ein eigenständiger Router, der parallel zu einem modularen Automatisierungsgerät an dessen IP-Subnetze angeschlossen wird. Entsprechend dem vorliegenden Ausführungsbeispiel wird eine Routenkonfiguration im Router-Modul 103 zentralisiert, anstatt wie bei bisherigen Lösungen auf mehrere Kommunikationsmodule aufgeteilt zu sein. Eine Konsistenzsicherung ist damit einfach möglich. Darüber hinaus werden Rückwirkungen durch IP-Routing-Funktionen eines modularen industriellen Automatisierungsgeräts auf Firmware der Funktionsmodule 101-102 minimiert, da durch die MAC-Bridges 112, 122 eine Kapselung erfolgt. Eine Firmware-Erweiterung oder -Fehlerkorrektur des Router-Moduls 103 erfordert grundsätzlich keine erneute Anpassung der MAC-Bridges 112, 122. Außerdem kann das Router-Modul 103 kann mit einer optionalen Firewall Zusatzfunktionalität umsetzen, ohne daß hier eine Firmware-Änderungen der Funktionsmodule 101-102 erforderlich sind.

## Patentansprüche

1. Modulares industrielles Automatisierungsgerät (1) mit
- einem Rückwandbus-System (100),
- mehreren an das Rückwandbus-System angeschlossenen Funktionsmodulen (101-102), die jeweils
- einen Kommunikationsnetzadapter (111, 121) und
- eine Funktionseinheit (113, 123) zur Implementierung eines Kommunikationsprotokollstapels umfassen,
- einem an das Rückwandbus-System angeschlossenen Router-Modul (103), das
- einen Kommunikationsnetzadapter (131) und
- eine mit diesem Kommunikationsnetzadapter (131) verknüpfte Funktionseinheit (134) zur Implementierung eines Router-Kommunikationsprotokollstapels umfaßt,
**dadurch gekennzeichnet, dass**
- die Funktionsmodule (101-102) jeweils
- ein mit dem von ihnen umfassten Kommunikationsnetzadapter (111, 121) verknüpftes Brückenelement (112, 122) umfassen, das einen ersten Dienstzugangspunkt für die Funktionseinheit (113, 123) zur Implementierung des Kommunikationsprotokollstapels und einen zweiten Dienstzugangspunkt aufweist, der dem Rückwandbus-System zugeordnet ist,
- wobei die Kommunikationsprotokollstapel der Funktionsmodule (101, 102) Transport-Funktionen umfassen und wobei die Kommunikationsprotokollstapel der Funktionsmodule (101, 102) keine Routing-Funktionen umfassen,
- das Router-Modul (103)
- für jedes Funktionsmodul (101, 102) jeweils ein Verknüpfungselement (132, 133) umfaßt, das die Funktionseinheit (134) zur Implementierung des Router-Kommunikationsprotokollstapels über das Rückwandbus-System mit dem zweiten Dienstzugangspunkt des jeweiligen Funktionsmoduls verknüpft,
- wobei nur der Kommunikationsprotokollstapel der Funktionseinheit (134) des Router-Moduls (103) Routing-Funktionen umfaßt.

2. Automatisierungsgerät nach Anspruch 1,
bei dem die Kommunikationsprotokollstapel der Funktionsmodule und der Router-Protokollstapel IP-Stacks, insbesondere TCP/IP-Stacks oder UDP/IP-Stacks, sind.

3. Automatisierungsgerät nach einem der Ansprüche 1 oder 2,
bei dem die Kommunikationsnetzadapter (111, 121, 131) jeweils eine Sende- und Empfangseinheit sowie eine Funktionseinheit zur Steuerung eines Zugriffs auf ein Kommunikationsmedium umfassen.

4. Automatisierungsgerät nach einem der Ansprüche 1 bis 3,
bei dem die Brückenelemente jeweils eine MAC-Bridge sind.

5. Automatisierungsgerät nach Anspruch 4,
bei dem die MAC-Bridges jeweils softwareimplementiert sind.

6. Automatisierungsgerät nach einem der Ansprüche 1 bis 5,
bei dem die Brückenelemente jeweils eine Nachrichtenfiltereinheit am zweiten Dienstzugangspunkt umfassen.

7. Automatisierungsgerät nach einem der Ansprüche 1 bis 6,
bei dem jedem Dienstzugangspunkt jeweils eine eigene MAC-Adresse zugeordnet ist.

8. Automatisierungsgerät nach einem der Ansprüche 1 bis 7,
bei dem die Verknüpfungselemente als virtualisierte Kommunikationsnetzadapter ausgestaltet sind.

9. Automatisierungsgerät nach einem der Ansprüche 1 bis 8,
bei dem die Funktionseinheiten (113, 123) zur Implementierung eines Kommunikationsprotokollstapels jeweils softwareimplementiert sind.

10. Automatisierungsgerät nach einem der Ansprüche 1 bis 9,
bei dem die Funktionsmodule eine Zentraleinheit und/oder ein Kommunikationsmodul des modularen Automatisierungsgeräts umfassen.

11. Verfahren zur Übermittlung von Nachrichten über ein Rückwandbus-System (100) eines nach einem der Ansprüche 1-10 ausgestalteten modularen industriellen Automatisierungsgeräts (1), bei dem
- an den Kommunikationsnetzadaptern (111, 121) der Funktionsmodule (101-102) empfangene Nachrichten entsprechend ihrer jeweiligen Ziel-MAC-Adresse an den ersten und/oder zweiten Dienstzugangspunkt des Brückenelements (112, 122) des jeweiligen Funktionsmoduls weitergeleitet werden,
- an den ersten Dienstzugangspunkt weitergeleitete Nachrichten durch die Funktionseinheit (113, 123) zur Implementierung des Kommunikationsprotokollstapels des jeweiligen Funktionsmoduls verarbeitet werden,
- an den zweiten Dienstzugangspunkt weitergeleitete Nachrichten über das Rückwandbus-System (100) an ein jeweils zugeordnetes Verknüpfungselement (132, 133) des Router-Moduls (103) weitergeleitet und durch die Funktionseinheit (134) zur Implementierung des Router-Kommunikationsprotokollstapels verarbeitet werden.

12. Verfahren nach Anspruch 11,
bei dem von der Funktionseinheit (113, 123) zur Implementierung des Kommunikationsprotokollstapels des jeweiligen Funktionsmoduls (101, 102) ausgehende Nachrichten entsprechend ihrer jeweiligen Ziel-MAC-Adresse an den Kommunikationsnetzadapter (111, 121) des jeweiligen Funktionsmoduls (101, 102) oder an das jeweils zugeordnete Verknüp-fungselement (132, 133) des Router-Moduls (103) übermittelt werden.

13. Verfahren nach einem der Ansprüche 11 oder 12,
bei dem von der Funktionseinheit (134) zur Implementierung des Router-Kommunikationsprotokollstapels ausgehende Nachrichten entsprechend ihrer jeweiligen Ziel-MAC-Adresse über das jeweils zugeordnete Verknüpfungselement (132, 133) an den Kommunikationsnetzadapter (111, 121) oder an die Funktionseinheit (113, 123) zur Implementierung des Kommunikationsprotokollstapels des jeweiligen Funktionsmoduls (101, 102) übermittelt werden.

## Claims

1. Modular industrial automation appliance (1) having
- a backplane bus system (100),
- a plurality of functional modules (101-102) connected to the backplane bus system that each comprise
- a communication network adapter (111, 121) and
- a functional unit (113, 123) for implementing a communication protocol stack,
- a router module (103) that is connected to the backplane bus system and that comprises
- a communication network adapter (131) and
- a functional unit (134) for implementing a router communication protocol stack, which functional unit is linked to said communication network adapter (131),
**characterized in that**
- the functional modules (101-102) each comprise
- a bridge element (112, 122) that is linked to the communication network adapter (111, 121) which it comprises and that has a first service access point for the functional unit (113, 123) for implementing the communication protocol stack and a second service access point that is associated with the backplane bus system,
- wherein the communication protocol stacks of the functional modules (101, 102) comprise transport functions and wherein the communication protocol stacks of the functional modules (101, 102) comprise no routing functions,
- the router module (103) comprises
- for each functional module (101, 102) a respective link element (132, 133) that links the functional unit (134) for implementing the router communication protocol stack to the second service access point of the respective functional module via the backplane bus system,
- wherein only the communication protocol stack of the functional unit (134) of the router module (103) comprises routing functions.

2. Automation appliance according to Claim 1,
in which the communication protocol stacks of the functional modules and the router protocol stack are IP stacks, particularly TCP/IP stacks or UDP/IP stacks.

3. Automation appliance according to either of Claims 1 and 2,
in which the communication network adapters (111, 121, 131) each comprise a transmission and reception unit and a functional unit for controlling access to a communication medium.

4. Automation appliance according to one of Claims 1 to 3,
in which the bridge elements are each an MAC bridge.

5. Automation appliance according to Claim 4,
in which the MAC bridges are each software-implemented.

6. Automation appliance according to one of Claims 1 to 5,
in which the bridge elements each comprise a message filter unit at the second service access point.

7. Automation appliance according to one of Claims 1 to 6,
in which each service access point has a respective associated dedicated MAC address.

8. Automation appliance according to one of Claims 1 to 7,
in which the link elements are embodied as virtualized communication network adapters.

9. Automation appliance according to one of Claims 1 to 8,
in which the functional units (113, 123) for implementing a communication protocol stack are each software-implemented.

10. Automation appliance according to one of Claims 1 to 9,
in which the functional modules comprise a central unit and/or a communication module of the modular automation appliance.

11. Method for transmitting messages via a backplane bus system (100) of a modular industrial automation appliance (1) embodied according to one of Claims 1-10, in which
- messages received at the communication network adapters (111, 121) of the functional modules (101-102) are forwarded in accordance with their respective destination MAC address to the first and/or second service access point of the bridge element (112, 122) of the respective functional module,
- messages forwarded to the first service access point are processed by the functional unit (113, 123) for implementing the communication protocol stack of the respective functional module,
- messages forwarded to the second service access point are forwarded to a respectively associated link element (132, 133) of the router module (103) via the backplane bus system (100) and processed by the functional unit (134) for implementing the router communication protocol stack.

12. Method according to Claim 11,
in which messages setting out from the functional unit (113, 123) for implementing the communication protocol stack of the respective functional module (101, 102) are transmitted in accordance with their respective destination MAC address to the communication network adapter (111, 121) of the respective functional module (101, 102) or to the respectively associated link element (132, 133) of the router module (103).

13. Method according to either of Claims 11 and 12,
in which messages setting out from the functional unit (134) for implementing the router communication protocol stack are transmitted in accordance with their respective destination MAC address to the communication network adapter (111, 121) or to the functional unit (113, 123) for implementing the communication protocol stack of the respective functional module (101, 102) via the respectively associated link element (132, 133).

## Revendications

1. Appareil (1) d'automatisation industriel modulaire comprenant
- un système (100) de bus de fond de panier
- plusieurs modules (101-102) fonctionnels raccordés au système de bus de fond de panier, qui comprennent respectivement
- un adaptateur (111, 121) de réseau de communication et
- une unité (113, 123) fonctionnelle pour la mise en oeuvre d'une pile de procès-verbaux de communication,
- un module (103) de routeur raccordé au système de bus de fond de panier qui comprend
- un adaptateur (131) de réseau de communication et
- une unité (134) fonctionnelle combinée à cet adaptateur (131) de réseau de communication pour la mise en oeuvre d'une pile de procès-verbaux de communication de routeur,
**caractérisé en ce que**
- les modules (101-102) fonctionnels comprennent respectivement
- un élément (112, 122) de pont, qui est combiné à l'adaptateur (111, 121) de réseau de communication et qui a un premier point d'accès de service pour l'unité (113, 123) fonctionnelle pour la mise en oeuvre de la pile de procès-verbaux de communication, et un deuxième point d'accès de service qui est affecté au système de bus de fond de panier,
- dans lequel la pile de procès-verbaux de communication des modules (101, 102) fonctionnels comprend des fonctions de transport et dans lequel la pile de procès-verbaux de communication des modules (101, 102) fonctionnels ne comprend pas de fonction de routage,
- le module (103) de routeur comprend
- pour chaque module (101, 102) fonctionnel respectivement un élément (132, 133) de combinaison, qui combine l'unité (134) fonctionnelle pour la mise en oeuvre de la pile de procès-verbaux de communication de routeur par l'intermédiaire du système de bus de panier au deuxième point d'accès de service du module fonctionnel respectif,
- dans lequel seule la pile de procès-verbaux de communication de l'unité (134) fonctionnelle du module (103) de routeur comprend des fonctions de routage.

2. Appareil d'automatisation suivant la revendication 1,
dans lequel la pile de procès-verbaux de communication des modules fonctionnels et la pile de procès-verbaux de routeurs sont des piles IP, notamment des piles TCP/IP ou UDP/IP.

3. Appareil d'automatisation suivant l'une des revendications 1 ou 2,
dans lequel l'adaptateur 3 de réseau de communication comprend respectivement une unité d'émission et de réception, ainsi qu'une unité fonctionnelle pour la commande d'un accès à un support de communication.

4. Appareil d'automatisation suivant l'une des revendications 1 à 3,
dans lequel les éléments de pont sont respectivement un Bridge MAC.

5. Appareil d'automatisation suivant la revendication 4,
dans lequel les Bridges MAC sont mis en oeuvre respectivement par logiciel.

6. Appareil d'automatisation suivant l'une des revendications 1 à 5,
dans lequel les éléments de pont comprennent respectivement une unité de filtrage de messages au deuxième point d'accès de service.

7. Appareil d'automatisation suivant l'une des revendications 1 à 6,
dans lequel à chaque point d'accès de service est associé respectivement sa propre adresse MAC.

8. Appareil d'automatisation suivant l'une des revendications 1 à 7,
dans lequel les éléments de combinaison sont conformés en adaptateurs de réseaux de communication virtualisés.

9. Appareil d'automatisation suivant l'une des revendications 1 à 8,
dans lequel les unités (113, 123) fonctionnelles pour la mise en oeuvre d'une pile de procès-verbaux de communication sont mises en oeuvre respectivement par logiciel.

10. Appareil d'automatisation suivant l'une des revendications 1 à 9,
dans lequel les modules fonctionnels comprennent une unité centrale et/ou un module de communication de l'appareil d'automatisation modulaire.

11. Procédé de transmission de messages par un système (100) de bus de fond de panier d'un appareil (1) d'automatisation industriel modulaire conformé suivant l'une des revendications 1 à 10, dans lequel
- on achemine des messages reçus aux adaptateurs (111, 121) de réseaux de communication des modules (101-102) fonctionnels, conformément à leur adresse MAC cible respective, au premier et/ou au deuxième point d'accès de service de l'élément (112-122) de pont du module fonctionnel respectif,
- on traite des messages acheminés au premier point d'accès de service par l'unité (113, 123) fonctionnelle pour la mise en oeuvre de la pile de procès-verbaux de communication du module fonctionnel respectif,
- on achemine des messages acheminés au deuxième point d'accès de service, par le système (100) de bus de fond de panier à un élément (132, 133) de combinaison, affecté respectivement, du module (103) de routeur et on les traite par l'unité (134) fonctionnelle pour la mise en oeuvre de la pile de procès-verbaux de communication de routeur.

12. Procédé suivant la revendication 11,
dans lequel on transmet des messages provenant de l'unité (113, 123) fonctionnelle pour la mise en oeuvre de la pile de procès-verbaux de communication du module (101, 102) fonctionnel respectif, conformément à leur adresse MAC cible respective, à l'adaptateur (111, 121) de communication du module (101, 102) fonctionnel respectif ou à l'élément (132, 133) de combinaison affecté respectivement du module (103) de routeur.

13. Procédé suivant l'une des revendications 11 ou 12,
dans lequel on transmet des messages provenant de l'unité (134) fonctionnelle pour la mise en oeuvre de la pile de procès-verbaux de communication de routeur, conformément à leur adresse MAC cible respective, par l'élément (132, 133) de combinaison affecté respectivement, à l'adaptateur (111, 121) de réseau de communication ou à l'unité (113, 123) fonctionnelle pour la mise en oeuvre de la pile de procès-verbaux de communication du module (101, 102) fonctionnel respectif.
